# EUROPEAN PATENT APPLICATION

(11) **EP 4 797 862 A1**
(43) Date of publication of application: **26.08.2026**
(21) Application number: 24914795.0
(22) Date of filing: 31.07.2024
(51) Int. Cl.: H04W 76/15

(54) **COMMUNICATION METHOD, DEVICE, AND STORAGE MEDIUM**

(30) Priority: 05.01.2024 CN 202410030926
(71) Applicant: ZTE Corporation, Shenzhen, Guangdong 518057 (CN)
(72) Inventor: YUAN, Liquan, Shenzhen, Guangdong 518057 (CN)
(74) Representative: Aipex B.V.
(86) International application number: PCT/CN2024/108698
(87) International publication number: WO 2025/145573

(57) **Abstract**

Provided are a communication method, a device, and a storage medium. A communication method applied to a first network device includes sending a first information frame to a second network device on a first channel; and receiving a second information frame returned by the second network device on a second channel.

## Description

### TECHNICAL FIELD

The present application relates to the field of communication technologies, specifically a communication method, a device, and a storage medium.

### BACKGROUND

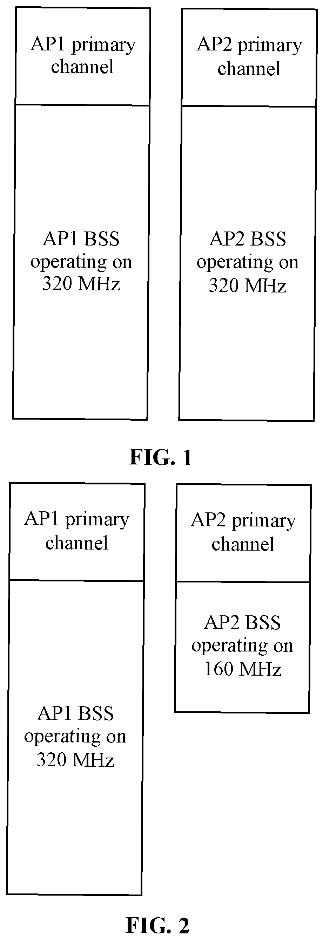

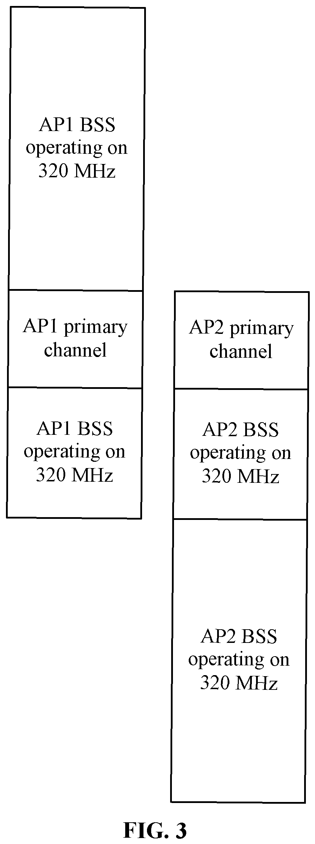

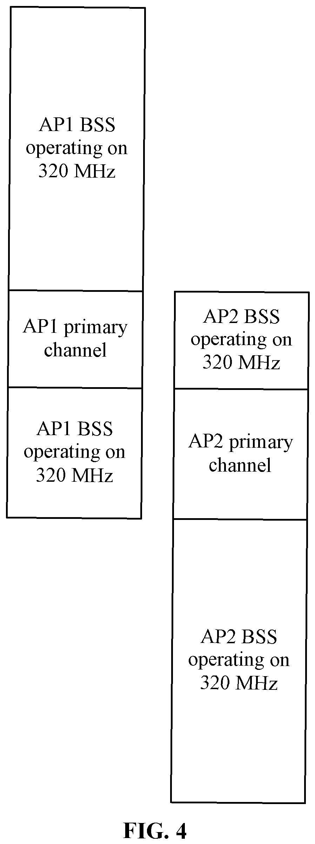

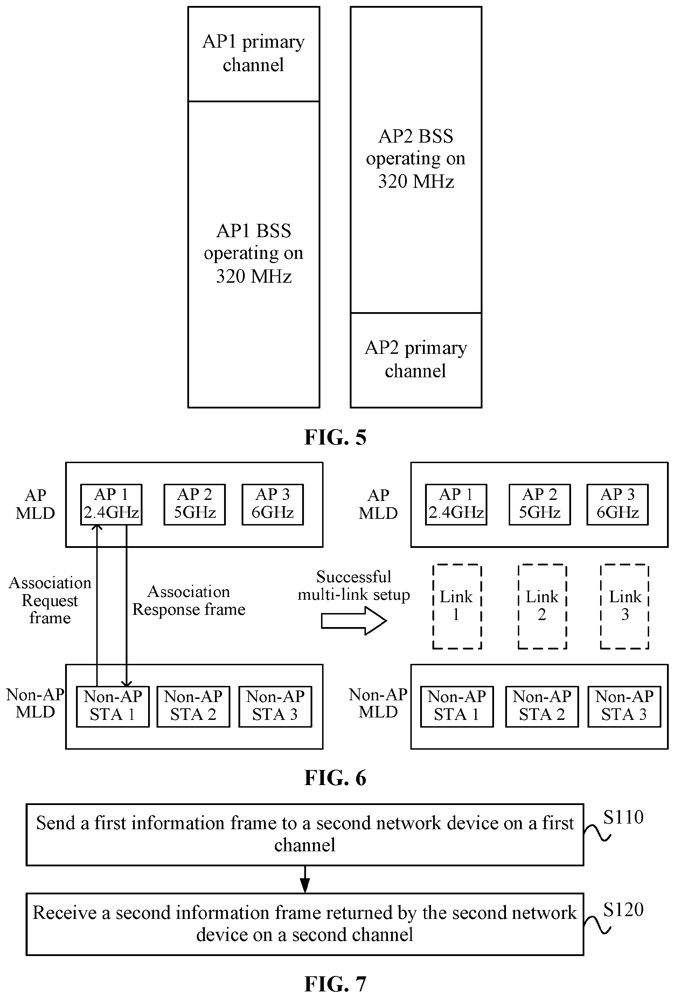

A conventional access point (AP) can send information frames such as beacon frames, authentication frames, association request/response frames, and other management frames on only one primary 20 MHz (P20) channel. When two APs whose basic service sets (BSSs) overlap correspond to different P20 channels, communication cannot be performed in a conventional manner. FIG. 1 is a diagram of a configuration scenario in which BSSs overlap each other in the related art. As shown in FIG. 1, AP1 and AP2 correspond to the same P20 channel and operate on the same 320 MHz channel. FIG. 2 is a diagram of a configuration scenario in which BSSs overlap each other in the related art. As shown in FIG. 2, AP1 and AP2 correspond to the same P20 channel, the working channel bandwidth of AP1 is 320 MHz, the working channel bandwidth of AP2 is 160 MHz, and the working channel of AP2 completely overlaps that of AP1. FIG. 3 is a diagram of a configuration scenario in which BSSs overlap each other in the related art. As shown in FIG. 3, AP1 and AP2 correspond to the same P20 channel but operate on different 320 MHz channels. FIG. 4 is a diagram of a configuration scenario in which BSSs overlap each other in the related art. As shown in FIG. 4, AP1 and AP2 both operate on 320 MHz channels, their working channels partially overlap, and AP1 and AP2 correspond to different P20 channels. FIG. 5 is a diagram of a configuration scenario in which BSSs overlap each other in the related art. As shown in FIG. 5, AP1 and AP2 operate on completely overlapping 320 MHz channels but correspond to different P20 channels. In a conventional approach, in the scenarios shown in FIGS. 1 to 3, AP1 and AP2 can discover each other and exchange other information frames in a conventional manner. However, in the scenarios shown in FIGS. 4 and 5, AP1 and AP2 cannot discover each other or exchange other information frames.

### SUMMARY

In view of this, embodiments of the present application provide a communication method, a device, and a storage medium, enabling two access points to exchange information frames during multi-AP coordination even when their working channels overlap and their primary channels are different.

Embodiments of the present application provide a communication method. The communication method is applied to a first communication device. The communication method applied to the first communication device includes sending a first information frame to a second network device on a first channel; and receiving a second information frame returned by the second network device on a second channel.

Embodiments of the present application provide a communication method. The communication method is applied to a second communication device. The communication method applied to the second communication device includes receiving a first information frame sent by a first network device on a first channel; and returning a second information frame to the first network device on a second channel.

Embodiments of the present application provide a communication device. The communication device includes a memory and at least one processor. The memory is configured to store at least one program. When executed by the at least one processor, the at least one program causes the least one processor to perform the communication method of any aforementioned embodiment.

Embodiments of the present application provide a storage medium storing a computer program which, when executed by a processor, causes the processor to perform the communication method of any aforementioned embodiment.

### BRIEF DESCRIPTION OF DRAWINGS

FIG. 1 is a diagram of a configuration scenario in which BSSs overlap each other in the related art.
FIG. 2 is a diagram of a configuration scenario in which BSSs overlap each other in the related art.
FIG. 3 is a diagram of a configuration scenario in which BSSs overlap each other in the related art.
FIG. 4 is a diagram of a configuration scenario in which BSSs overlap each other in the related art.
FIG. 5 is a diagram of a configuration scenario in which BSSs overlap each other in the related art.
FIG. 6 is a diagram illustrating multi-link setup in the related art.
FIG. 7 is a flowchart of a communication method according to embodiments of the present application.
FIG. 8 is a flowchart of a communication method according to embodiments of the present application.
FIG. 9 is a diagram illustrating information frame exchange between AP1 and AP2 according to embodiments of the present application.
FIG. 10 is a diagram illustrating duplication of the information frame of P20 by AP1 on some sub-channels according to embodiments of the present application.
FIG. 11 is a block diagram of a communication apparatus according to embodiments of the present application.
FIG. 12 is a block diagram of a communication apparatus according to embodiments of the present application.
FIG. 13 is a diagram illustrating the structure of a communication device according to embodiments of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

For ease of understanding the solutions of the present application, the channel access technologies involved in the present application are described as follows:

First, the Fiber-To-The-Room (FTTR) technology connects APs (for example, routers) located in different rooms or positions in scenarios such as homes or small and medium-sized enterprises via optical fibers, thereby providing high-bandwidth and high-reliability connections for networking between APs. A point-to-multipoint optical distribution network may be used to implement connection between a master AP and slave APs.

Second, the channel access technology based on carrier-sense multiple accesses with collision avoidance (CSMA/CA): In a Wi-Fi network, an AP and its associated terminal devices share the same wireless medium for data communication. The wireless medium access principle of Wi-Fi lies in enabling devices to use a mutual avoidance mechanism to fairly contend for access to the wireless medium in sequence and then send data.

The basic principle is the CSMA/CA mechanism. When multiple devices simultaneously use a wireless channel to send data, each device first performs channel listening. When the channel is determined to be idle, after a frame interval, the device randomly selects a backoff window and performs countdown to obtain an opportunity to send data on the wireless channel.

Third, in the Wi-Fi 7 protocol, the multi-link operation (MLO) technology is introduced. Multi-link devices (MLDs) include network devices (AP MLDs) and terminal devices (non-AP MLDs). A multi-link device can send data on multiple links simultaneously, thereby improving the throughput of data transmission and reducing the delay of data transmission.

After an AP MLD and a non-AP MLD complete a 4-way handshake on a link, an MLO-level pairwise transient key (PTK) and a link-level group temporal key (GTK) are generated. The PTK and the GTK are used for encrypting sent unicast data frames and multicast data frames and decrypting sent unicast data frames and multicast data frames respectively, thereby ensuring the security of data transmission. For example, FIG. 6 is a diagram illustrating multi-link setup in the related art. As shown in FIG. 6, the AP MLD and the non-AP MLD each include three links operating in the 2.4 GHz, 5 GHz, and 6 GHz bands. The AP MLD and the non-AP MLD complete authentication, connection, and the 4-way handshake on the 2.4 GHz link. After a multi-link association is established, data transmission can be performed on the three links.

Fourth, a neighbor report (NR) field includes information about other surrounding APs (or AP MLDs, hereinafter referred to as AP). The NR field is generally used by a STA (or non-AP MLD, hereinafter referred to as STA) to send a query frame to a target AP to query information about the other surrounding Aps. The target AP sends a response frame to the STA to return the information about the other surrounding APs queried by the STA. For example, the STA sends an access network query protocol (ANQP) query frame to the AP, and the AP returns an ANQP response frame to the STA.

Alternatively, in the scenario where roaming occurs or a load is balanced among multiple APs, the AP actively recommends the information about the other surrounding APs to the STA, and the STA confirms the information and then sends a (re)association request to one recommended AP. For example, the AP sends a basic service set (BSS) transition management (BTM) request frame to the STA and carries information about the recommended AP in the NR field. The STA sends a BTM response frame, where the NR field included in the BTM response frame carries information about an AP that the STA expects to connect, and then the STA sends an authentication frame and a (re)association frame to establish a connection to the target AP.

Fifth, a reduced neighbor report (RNR) field includes information about surrounding Aps. To reduce channel resource overheads caused by a field length, the NR field is correspondingly clipped and modified to form the RNR field, and the RNR field includes only key information of the surrounding APs, such as an operating channel, a service set identifier (SSID), and a basic service set identifier (BSSID) information. When the STA receives a management frame that is sent by one AP and carries the RNR field, such as a beacon frame and a probe response frame, the STA can quickly discover other surrounding APs and further perform a probe on the channel on which a target AP is located so that complete information of the AP is acquired, thereby reducing time overheads caused by blindly scanning the channel and probing the surrounding APs by the STA.

Sixth, a multi-link element field is introduced. This field is used to carry information about APs or STAs of other links belonging to the same MLD. This field is widely used in discovery and connection stages, for example, carried in beacon frames in a discovery stage, in multi-link probe request/response frames, and in (re)association request/response frames in a connection stage.

Seventh, multiple APs may be created on one radio frequency link of Wi-Fi, and each AP corresponds to a different BSSID. To reduce channel resource overheads for sending a beacon frame and a probe response frame by each AP, the MBSSID technology is introduced in the 802.11 protocol, that is, beacon frames and probe response frames sent by multiple APs on the same radio frequency are combined into a beacon frame and a probe response frame of one AP for sending. That is, the beacon frame and probe response frame of the one AP carry information about the other APs on the same radio frequency, and the information is placed in a multiple BSSID element field.

Eighth, in Wi-Fi 8, the Ultra High Reliability (UHR) technology is used to improve the transmission stability, including reducing the latency, increasing the throughput, and lowering the packet loss rate.

One approach is to share a transmission opportunity (TXOP) among overlapping BSSs, thereby reducing collisions caused by mutual channel contention between BSSs and preventing reduction in channel utilization. The general steps are described as follows:
(1) Multiple APs (for example, AP1 and AP2) send beacon frames or other management frames (also referred to as information frames) on their respective working channels.
(2) AP2 receives a beacon frame from AP1 and thus discovers AP1. By parsing a capability set of AP1, AP2 further determines that AP1 supports the multi-AP coordinated operation capability, and vice versa.
(3) AP1 initializes multi-AP coordinated operation and becomes a master AP.
(4) AP1 sends a request frame to AP2 to invite AP2 to join a coordinated operation group, and AP2 is initialized to a slave AP.
(5) AP1 configures a coordination group ID and assigns an AP ID to AP2.
(6) After the master AP successfully contends for channel resources, the master AP allocates resource units (RUs) and/or TXOP time slices to one or more slave APs (including the sharing AP) in a trigger frame according to the requirements of the slave APs.
(7) After acquiring an RU, the slave AP sends downlink data or a null data PPDU announcement (NDPA)/null data PPDU (NDP) to STAs within the BSS on the RU and/or within the TXOP time slice.

Embodiments of the present application provide a communication method to solve, during AP coordination, the problem that when working channels of BSSs overlap but P20 channels are different, two APs cannot exchange management frames.

A first solution is as follows: A first network device (for example, AP1) sends the same information frame simultaneously on its 20 MHz sub-channels. A second network device (for example, AP2) receives the information frame on its P20 channel, discovers AP1, and responds to the information frame.

A second solution is as follows: AP1 temporarily switches to the P20 channel of AP2 and exchanges information frames with AP2 using a conventional method. After the exchange is completed, AP1 returns to its original working channel.

It is to be noted that the two solutions are not mutually exclusive. In different application scenarios, at least one of the two solutions may be selected for implementation.

In an embodiment, FIG. 7 is a flowchart of a communication method according to embodiments of the present application. This embodiment is applied to a transmission scenario of management frames between two access points when BSS working channels overlap during multi-AP coordination. This embodiment may be implemented by a first network device. As shown in FIG. 7, this embodiment includes S110 and S120.

In S110, a first information frame is sent to a second network device on a first channel.

In S120, a second information frame returned by the second network device on a second channel is received.

In an embodiment, the first information frame includes at least one of the following types: a multicast-type non-request frame, a unicast-type non-request frame, a unicast-type request frame, or a multicast-type request frame. When the first information frame is a unicast-type request frame, the second information frame is correspondingly a unicast-type response frame.

In an embodiment, the first information frame and the second information frame each include at least one of the following: a beacon frame, a probe request frame, a probe response frame, a multi-link probe request frame, a multi-link probe response frame, an association request frame, a reassociation request frame, an association response frame, a reassociation response frame, an authentication frame, or an action frame.

In an embodiment, the first channel includes a working channel corresponding to the first network device; and sending the first information frame to the second network device on the first channel includes sending the same first information frame to the second network device on all sub-channels of the working channel, and the sub-channels include a primary channel corresponding to the first network device. The working channel corresponding to the first network device includes one or more sub-channels such as a primary channel (that is, a P20 channel). Generally, after the first network device successfully contends for channel resources on one or more sub-channels, the first network device may duplicate the first information frame on the P20 channel into multiple copies and send the first information frame on all the sub-channels on which channel resources have been successfully contended for. In an example, the number of copies of the first information frame in the P20 channel is equal to the number of sub-channels on which channel resources have been successfully contended for by the first network device.

In an embodiment, the communication method applied to the first network device further includes configuring the same random backoff window on all sub-channels of the working channel corresponding to the first network device and contending for channel resources.

Correspondingly, sending the first information frame to the second network device on the first channel includes sending the first information frame to the second network device on all sub-channels on which channel resources are successfully contended for.

In an embodiment, the first network device does not send the first information frame on sub-channels whose current channel state is an occupied state. The occupied state may also be understood as a busy state. The current channel state indicates whether a sub-channel contended for by the first network device is occupied. The current channel state includes a busy state and an idle state. If the first network device fails to acquire channel access to a sub-channel, that is, the current channel state of the sub-channel is a busy state, the first network device does not send the first information frame on a sub-channel that is busy.

In an embodiment, in response to a current channel state of the primary channel corresponding to the first network device being an occupied state, configuring random backoff windows for sub-channels, other than the primary channel, of the working channel corresponding to the first network device is delayed by the first network device until the current channel state of the primary channel corresponding to the first network device becomes an idle state. The primary channel corresponding to the first network device refers to a P20 channel of the working channel corresponding to the first network device.

In an embodiment, in response to the current channel state of the primary channel corresponding to the second network device being an occupied state, configuring random backoff windows for sub-channels, other than the primary channel, of the working channel corresponding to the first network device is delayed by the first network device until the current channel state of the primary channel corresponding to the second network device becomes an idle state. The primary channel corresponding to the second network device refers to a P20 channel of the working channel corresponding to the second network device. When the current channel state of the sub-channel corresponding to the P20 channel of the second network device is busy, the first network device delays configuring random backoff windows for its sub-channels, other than the primary channel, until the P20 channel of the second network device becomes idle, thereby ensuring that the second network device can receive, on its P20 channel, the first information frame sent by the first network device.

In an embodiment, in response to the first information frame being a request frame, the second information frame is a response frame; and sub-channels on which the first network device sends the request frame are partially the same as sub-channels on which the second network device returns the response frame.

In an embodiment, in response to the first network device sending a unicast-type request frame to the second network device, the first network device sends the unicast-type request frame on sub-channels overlapping sub-channels including a primary channel corresponding to the second network device.

In an embodiment, the first information frame includes working channel information of the primary channel corresponding to the first network device. The first information frame sent by the first network device to the second network device includes working channel information of the P20 channel corresponding to the first network device. The second network device may receive the first information frame on any sub-channel and can thereby discover configuration information of the first network device.

In an embodiment, in response to the first network device sending a third information frame to a terminal device or a third network device on the first channel, sending the first information frame to the second network device on the first channel includes switching, by the first network device, from the first channel to the second channel and sending the first information frame to the second network device on the second channel. The first network device contends for channel resources on its own primary channel and on the primary channel corresponding to the second network device. After channel resources on the two sub-channels are contended for successfully, the first network device may send a third information frame to a terminal device or a third network device on its own primary channel and switch to the primary channel corresponding to the second network device to send the first information frame to the second network device.

In an embodiment, the communication method applied to the first network device also includes configuring a random backoff window on the second channel and contending for channel resources.

In an embodiment, the first network device contends for channel resources on both its own primary channel and a primary channel corresponding to the second network device. In an example, the first network device may simultaneously contend for channel resources on both its own primary channel and on the primary channel corresponding to the second network device. Alternatively, the first network device may contend for channel resources on its own primary channel and on the primary channel corresponding to the second network device at different times (i.e., in a non-simultaneous manner).

In an embodiment, the first network device switches from the first channel to the second channel, and the first network device and the second network device perform information frame exchange for at least two times.

In an embodiment, sending the first information frame to the second network device on the first channel includes on a primary channel of a second neighboring network device corresponding to the second network device, sending, through a first neighboring network device corresponding to the first network device, the first information frame to the second neighboring network device corresponding to the second network device, where the first information frame carries configuration information of the first network device. The first network device and the first neighboring network device are neighboring devices. The second network device and the second neighboring network device are neighboring devices. The first neighboring network device and the second neighboring network device correspond to BSSs whose working channels overlap but correspond to different P20 channels. The first neighboring network device corresponding to the first network device may send the first information frame to the second neighboring network device on the primary channel of the second neighboring network device corresponding to the second network device. After the second neighboring network device receives the first information frame, the second neighboring network device and the second network device can discover the first network device and the configuration information of the first network device.

In an embodiment, receiving the second information frame returned by the second network device on the second channel includes receiving the second information frame returned through the second neighboring network device corresponding to the second network device, where the second information frame carries configuration information of the second network device. The first network device and the first neighboring network device are neighboring devices. The second network device and the second neighboring network device are neighboring devices. The first neighboring network device and the second neighboring network device correspond to BSSs whose working channels overlap but correspond to different P20 channels. The first neighboring network device corresponding to the first network device may send the first information frame to the second neighboring network device on the primary channel of the second neighboring network device corresponding to the second network device. After the second neighboring network device receives the first information frame, the second neighboring network device and the second network device can discover the first network device and the configuration information of the first network device. The second neighboring network device sends the second information frame to the first neighboring network device. After receiving the second information frame, the first neighboring network device and the first network device can discover the second network device and the configuration information of the second network device.

In an embodiment, when the first network device and the second network device do not send BSSIDs, the first network device and the first neighboring network device share one radio frequency link, and the second network device and the second neighboring network device share one radio frequency link. That is, the working channel information and the P20 channel information of the first network device are the same as those of the first neighboring network device, and the working channel information and the P20 channel information of the second network device are the same as those of the second neighboring network device.

In an embodiment, a carrier field of the configuration information of the first network device and a carrier field of the configuration information of the second network device each include at least one of the following: multi-link (ML) field, reduced neighbor report (RNR) field, neighbor report (NR) field, or multiple basic service set identifier (MBSSID) field.

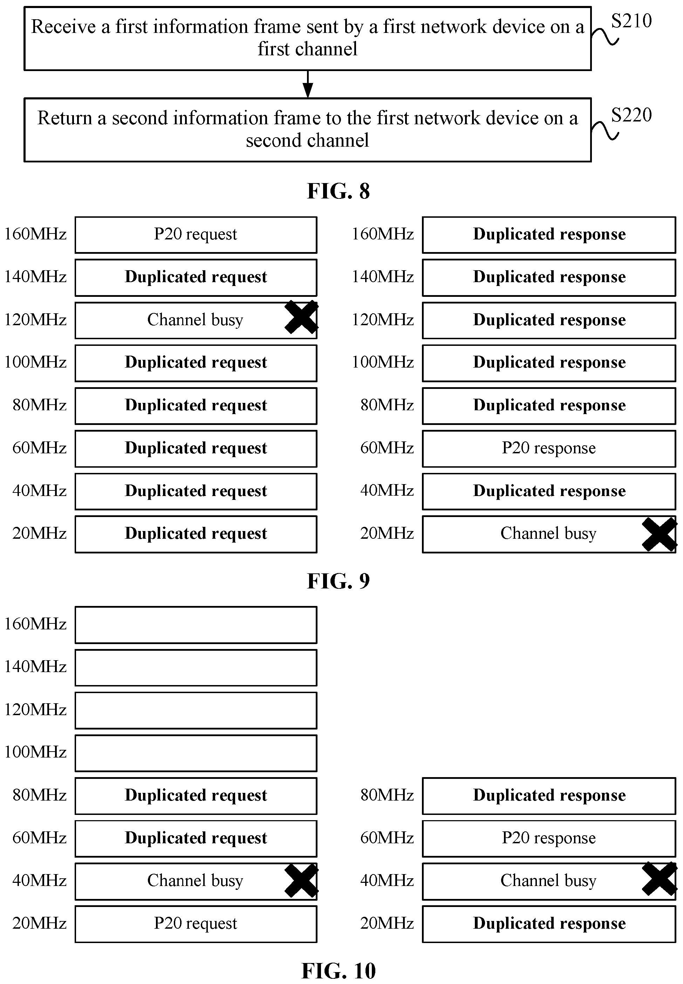

In an embodiment, FIG. 8 is a flowchart of a communication method according to embodiments of the present application. This embodiment is applied to a transmission scenario of management frames between two access points when BSS working channels overlap during multi-AP coordination. This embodiment may be implemented by a second network device. As shown in FIG. 8, this embodiment includes S210 and S220.

In S210, a first information frame sent by a first network device on a first channel is received.

In S220, a second information frame is returned to the first network device on a second channel.

In an embodiment, the first information frame includes at least one of the following types: a multicast-type non-request frame, a unicast-type non-request frame, a unicast-type request frame, or a multicast-type request frame. When the first information frame is a unicast-type request frame, the second information frame is correspondingly a unicast-type response frame.

In an embodiment, the first information frame and the second information frame each include at least one of the following: a beacon frame, a probe request frame, a probe response frame, a multi-link probe request frame, a multi-link probe response frame, an association request frame, a reassociation request frame, an association response frame, a reassociation response frame, an authentication frame, or an action frame.

In an embodiment, the first channel includes a working channel corresponding to the first network device; and receiving the first information frame sent by the first network device on the first channel includes receiving the first information frame sent by the first network device on all sub-channels of the working channel, the sub-channels of the working channel include a primary channel corresponding to the first network device. The primary channel corresponding to the first network device may be a P20 channel. Generally, after the first network device successfully contends for channel resources in one or more sub-channels, the first network device may duplicate the first information frame on the P20 channel into multiple copies and send the first information frame to the second network device on the sub-channels on which channel resources have been successfully contended for. In an example, the number of copies of the first information frame in the P20 channel is equal to the number of sub-channels on which the channel resources have been successfully contended for by the first network device.

In an embodiment, the first network device does not send the first information frame on sub-channels whose current channel state is an occupied state.

In an embodiment, in response to a current channel state of the primary channel corresponding to the first network device being an occupied state, configuring random backoff windows for sub-channels, other than the primary channel, of the working channel corresponding to the first network device is delayed by the first network device until the primary channel corresponding to the first network device becomes an idle state.

In an embodiment, in response to a current channel state of the primary channel corresponding to the second network device being an occupied state, configuring random backoff windows for sub-channels, other than the primary channel, of the working channel corresponding to the first network device is delayed by the first network device until the primary channel corresponding to the second network device becomes an idle state.

In an embodiment, in response to the first information frame being a request frame, the second information frame is a response frame; and sub-channels on which the first network device sends the request frame are partially the same as sub-channels on which the second network device returns the response frame.

In an embodiment, in response to the first network device sending a unicast-type request frame to the second network device, the first network device sends the unicast-type request frame on sub-channels overlapping sub-channels including a primary channel corresponding to the second network device.

In an embodiment, the first information frame includes working channel information of the primary channel corresponding to the first network device.

In an embodiment, in response to the first network device sending a third information frame to a terminal device or a third network device on the first channel, receiving the first information frame sent by the first network device on the first channel includes switching, by the first network device, from the first channel to the second channel and receiving, on the second channel, the first information frame sent by the first network device.

In an embodiment, the first network device contends for channel resources on both a primary channel corresponding to the first network device and a primary channel corresponding to the second network device.

In an embodiment, the first network device switches from the first channel to the second channel, and the first network device and the second network device perform information frame exchange for at least two times.

In an embodiment, receiving the first information frame sent by the first network device on the first channel includes on a primary channel of a second neighboring network device corresponding to the second network device, receiving, through the second neighboring network device corresponding to the second network device, the first information frame sent through a first neighboring network device corresponding to the first network device, where the first information frame carries configuration information of the first network device.

In an embodiment, returning the second information frame to the first network device on the second channel includes returning, through the second neighboring network device corresponding to the second network device, the second information frame to the first network device, where the second information frame carries configuration information of the second network device.

In an embodiment, a carrier field of the configuration information of the first network device and a carrier field of the configuration information of the second network device each include at least one of the following: an ML field, an RNR field, an NR field, or an MBSSID field.

For explanations of parameters such as the first information frame, the working channel information, the first neighboring network device, and the second neighboring network device in the communication method applied to the second network device, see the descriptions of the corresponding parameters in the communication method applied to the first network device. The details are not repeated here.

In an embodiment, the process in which two BSSs with different P20 channels interact through information frames is described by taking an example in which the first network device is AP1 and the second network device is AP2. The process in which two BSSs with different P20 channels perform interactive communication through information frames includes the following steps:
In step 1, the first network device (AP1) contends for channel resources on a first channel (channel 1 (CH1)).

In step 2, after acquiring channel access on the first channel, AP1 sends a first information frame to the second network device (AP2) on CH1.

In step 3, after receiving the first information frame on CH1, AP2 discovers AP1 and the configuration information of AP1 and performs one of the following operations:
(i) When the first information frame is a multicast-type non-request frame, the current information frame exchange ends.
(ii) When the first information frame is a unicast-type non-request frame, the receiving end AP2 replies with an acknowledgment on CH1.
(iii) When the first information frame is a unicast-type request frame or a multicast-type request frame, (when the first information frame is a unicast-type request frame, AP2 performs operation (ii) and then) proceeds to step 4.

In step 4, AP2 generates a corresponding response frame (that is, a second information frame) according to the request frame of AP1 and contends for channel resources on a second channel.

In step 5, after acquiring channel access to the second channel (channel 2 (CH2)), AP2 sends the second information frame to AP1 on CH2.

In step 6, after receiving the second information frame on CH2, AP1 discovers AP2 and the configuration information of AP2 and performs one of the following operations:
(i) When the second information frame is a multicast-type non-request frame, the information frame exchange ends.
(ii) When the second information frame is a unicast-type request frame, the receiving end AP2 replies with an acknowledgment on CH1, and the information frame exchange ends.

In step 7, AP1 and AP2 repeat these steps to interact information frames.

In an embodiment, the process in which AP1 and AP2 send the same information frame on all sub-channels including the P20 channel simultaneously is described by taking an example in which the first network device is AP1, the second network device is AP2, the first neighboring network device is AP3, and the second neighboring network device is AP4. The process in which AP1 and AP2 send the same information frame on all sub-channels including P20 simultaneously includes the following steps:

In step 1, before sending a management frame, AP1 configures the same random backoff window on all 20 MHz sub-channels of its working channel and then simultaneously contends for channel resources.

In step 2, after acquiring channel resources on multiple sub-channels, AP1 duplicates the management frame on the P20 channel into multiple copies and then simultaneously sends the copies on all sub-channels on which channel resources have been successfully contended for.

In step 3, after receiving the management frame on the P20 channel of AP2, AP2 discovers AP1 and the configuration information of AP1 and performs one of the following operations:
(1) When the management frame is a multicast-type management frame, the current management frame exchange ends.
(2) When the management frame is a unicast-type management frame, the receiving end AP2 replies with an acknowledgment on a corresponding sub-channel.
(3) When the management frame is a request frame, AP2 performs operation (2) and then proceeds to step 4.

In step 4, AP2 generates a corresponding response frame according to the request frame of AP1, configures the same random backoff window on all 20 MHz sub-channels of its working channel, and then simultaneously contends for channel resources.

In step 5, after channel resources on multiple sub-channels are successfully contend for, AP2 duplicates the management frame on the P20 working channel into multiple copies and simultaneously sends the response frame on all sub-channels on which channel resources have been successfully contend for.

In step 6, after receiving the response management frame on the P20 working channel of AP1, AP1 discovers AP2 and the configuration information of AP2 and performs one of the following operations:
(1) When the management frame is a multicast-type management frame, the current management frame exchange ends.
(2) When the management frame is a unicast-type management frame, AP1 replies with an acknowledgment on a corresponding sub-channel.

The following describes other information about the process in which AP1 and AP2 send the same information frame on all sub-channels including P20 simultaneously.

First, if AP1 fails to acquire channel access to some 20 MHz sub-channels, AP1 does not send the management frame on the sub-channels that are busy.

Second, if the P20 channel of AP1 indicates busy, AP1 delays configuring random backoff windows on sub-channels, other than the primary channel, until the P20 channel becomes an idle state.

Third, if the sub-channel corresponding to the P20 channel of AP2 indicates busy, AP1 delays configuring random backoff windows on sub-channels, other than the primary channel, until the sub-channel corresponding to the P20 channel of AP2 becomes an idle state (ensuring that AP2 can receive the information frame sent by AP1 on its P20).

Fourth, the sub-channel on which AP1 sends the request frame and the sub-channel on which AP2 replies with the response frame may be different. An application example is shown in FIG. 9.

Fifth, when AP1 sends a unicast-type request frame to AP2, AP1 sends the request frame on only working channels partially overlapping the P20 channel of AP2. An application example is shown in FIG. 10.

Sixth, the management frame sent by AP1 to AP2 carries the working channel information of the P20 channel, and AP2 may discover the configuration information of AP1 after receiving the management frame on any sub-channel.

Seventh, AP1 and AP3 are neighboring APs, AP2 and AP4 are neighboring APs, and AP3 and AP4 exchange, on a second link, information of AP1 and AP3 that are on a first link.

In an embodiment, the process in which AP1 temporarily switches its P20 working channel to the P20 working channel of AP2 and exchanges information frames with AP2 is described by taking an example in which the first network device is AP1 and the second network device is AP2. The process in which AP1 temporarily switches its P20 working channel to the P20 working channel of AP2 and exchanges information frames with AP2 includes the following steps:

In step 1, AP1 contends for channel resources on a first channel (the current P20 channel) and sends a first information frame to a terminal device (STA) or a third network device (for example, AP3), indicating that the BSS is in a busy or occupied state and indicating an occupied duration.

In step 2, AP1 switches to a second channel (the P20 channel of AP2), configures a random backoff window, and contends for channel resources.

In step 3, after acquiring channel access, AP1 sends a second information frame to AP2.

In step 4, after receiving the information frame on its P20 working channel, AP2 discovers AP1 and the configuration information of AP1 and performs one of the following operations:
(1) When the management frame is a multicast-type non-request frame, the current information frame exchange ends.
(2) When the management frame is a unicast-type request frame, AP2 replies with an acknowledgment on its P20 channel.
(3) When the information frame is a unicast-type request frame or a multicast-type request frame, (when the information frame is a unicast-type request frame, AP2 performs operation (2) and then) proceeds to step 5.

In step 5, AP2 generates a response-type third information frame and sends the response-type third information frame to AP1.

In step 6, before expiration of the occupied duration, AP1 switches back to the first channel (previous P20 channel).

The following describes other information about the process in which AP1 temporarily switches its P20 working channel to the P20 working channel of AP2 and exchanges information frames with AP2.

First, AP1 contends for channel resources on both its P20 channel and on the P20 channel of AP2. After acquiring channel resources on both P20 channels, AP1 sends the first information frame on its P20 and then switches to the P20 channel of AP2 to send a second management frame to AP2.

Second, after switching from the first channel to the second channel, AP1 may exchange the information frame with AP2 for multiple times.

Third, after AP1 completes exchange of the first information frame with AP2 and switches back to the first channel, AP2 switches its P20 channel to the first channel to exchange the second frame with AP1.

Fourth, AP1 and AP3 are neighboring APs, AP2 and AP4 are neighboring APs, and AP3 and AP4 exchange, on a second link, information of AP1 and AP2 that are on a first link.

In an embodiment, the process in which information of AP1 and information of AP2 carried by the neighboring AP of AP1 and the neighboring AP of AP2 respectively are exchanged on a second radio frequency link is described by taking an example in which the first network device is AP1, the second network device is AP2, the first neighboring network device is AP3, and the second neighboring network device is AP4. AP1 and AP3 are neighboring APs. AP2 and AP4 are neighboring APs. AP3 and AP4 correspond to BSSs whose working channels overlap but correspond to different P20 channels. The process of information exchange on the second radio frequency link includes the following steps:

In step 1, AP3 sends a first information frame to AP4 on the P20 channel of AP4, and AP3 carries the configuration information of AP1.

In step 2, after AP4 receives the information, AP4 and AP2 discover AP1 and the configuration information of AP1.

In step 3, AP4 sends acknowledgment information and/or a second information frame to AP3, where the second information frame carries the configuration information of AP2.

In step 4, after receiving the information, AP3 and AP1 discover AP2 and the configuration information of AP2.

In step 5, the preceding information frame interaction process is repeated.

The following describes other information about the process in which information of AP1 and information of AP2 carried by the neighboring AP of AP1 and the neighboring AP of AP2 respectively are exchanged on the second radio frequency link.

First, information of AP1 and information of AP2 carried by AP3 and AP4 are stored in the ML, RNR, NR, and MBSSID fields.

Second, when AP1 and AP2 do not send BSSIDs, AP1 and AP3 share one radio frequency link, and AP2 and AP4 share one radio frequency link. That is, the working channel information and the P20 channel information of AP1 are the same as those of AP3, and the working channel information and the P20 channel information of AP2 are the same as those of AP4.

In an example, FIG. 9 is a diagram illustrating information frame exchange between AP1 and AP2 according to embodiments of the present application. As shown in FIG. 9, AP1 and AP2 operate on the 160 MHz channel and correspond to overlapping BSSs. The P20 channel of AP1 is located at 160 MHz, and the P20 channel of AP2 is located at 60 MHz. When AP1 sends a request-type information frame to AP2, AP1 contends for channel resources on all sub-channels, but indicates a busy state of the 120 MHz sub-channel, and AP1 duplicates the request-type information frame of the P20 channel on all sub-channels (except the 120 MHz sub-channel) and sends the duplicated frames to AP2 on all sub-channels simultaneously.

After receiving the request-type management frame on the P20 of AP2, AP2 sends a corresponding response frame to AP1. The communication method is similar to the transmission mechanism of AP1. However, since the 20 MHz sub-channel is busy, AP2 replies with a response-type management frame on all sub-channels (except the 20 MHz sub-channel).

In an example, FIG. 10 is a diagram illustrating duplication of the information frame of P20 channel by AP1 on some sub-channels according to embodiments of the present application. As shown in FIG. 10, AP1 and AP2 operate on the 160 MHz channel and the 80 channel respectively and correspond to overlapping BSSs. The P20 of AP1 is located at 20MHz, and the P20 channel of AP2 is located at 60 MHz. When AP1 sends a request-type management frame to AP2, AP1 contends for channel resources on the P80 channel (that is, an 80 MHz channel including the P20 channel) but indicates a busy state of the 40 MHz sub-channel, and AP1 duplicates the request-type information frame of P20 channel on three sub-channels of P80 (except the 40 MHz sub-channel) and sends the duplicated frames to AP2 on the three sub-channels simultaneously.

After receiving the request-type management frame on the P20 of AP2, AP2 sends a corresponding response frame to AP1. The communication method is similar to the transmission mechanism of AP1. However, since the 40 MHz sub-channel is busy, AP2 replies with a response-type information frame on all sub-channels (except the 40 MHz sub-channel).

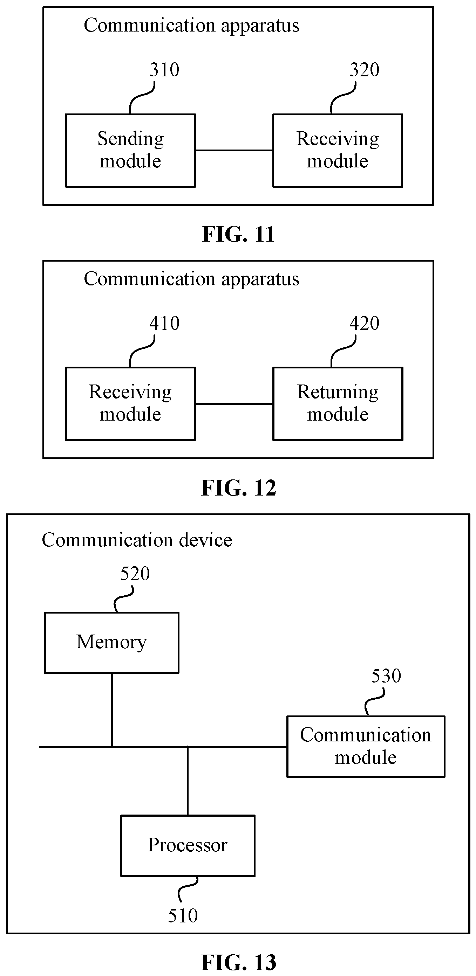

In an embodiment, FIG. 11 is a block diagram of a communication apparatus according to embodiments of the present application. This embodiment is applied to a first network device. As shown in FIG. 11, the communication apparatus of this embodiment includes a sending module 310 and a receiving module 320.

The sending module 310 is configured to send a first information frame to a second network device on a first channel.

The receiving module 320 is configured to receive a second information frame returned by the second network device on a second channel.

In an embodiment, the first information frame includes at least one of the following types: a multicast-type non-request frame, a unicast-type non-request frame, a unicast-type request frame, or a multicast-type request frame.

In an embodiment, the first information frame and the second information frame each include at least one of the following: a beacon frame, a probe request frame, a probe response frame, a multi-link probe request frame, a multi-link probe response frame, an association request frame, a reassociation request frame, an association response frame, a reassociation response frame, an authentication frame, or an action frame.

In an embodiment, the first channel includes a working channel corresponding to the first network device; and sending the first information frame to the second network device on the first channel includes sending the first information frame to the second network device on all sub-channels of the working channel corresponding to the first network device. The sub-channels of the working channel corresponding to the first network device include a primary channel corresponding to the first network device.

In an embodiment, the communication apparatus applied to the first network device also includes a configuration module configured to configure the same random backoff window on all sub-channels of the working channel corresponding to the first network device and contend for channel resources.

Correspondingly, the sending module is configured to send the first information frame to the second network device on all sub-channels on which channel resources are successfully contended for.

In an embodiment, the first network device does not send the first information frame on sub-channels whose current channel state is an occupied state.

In an embodiment, in response to the current channel state of the primary channel corresponding to the first network device being an occupied state, configuring random backoff windows for sub-channels, other than the primary channel, of the working channel corresponding to the first network device is delayed until the current channel state of the primary channel corresponding to the first network device becomes an idle state.

In an embodiment, in response to the current channel state of the primary channel corresponding to the second network device being an occupied state, configuring random backoff windows for sub-channels, other than the primary channel, of the working channel corresponding to the first network device is delayed until the current channel state of the primary channel corresponding to the second network device becomes an idle state.

In an embodiment, in response to the first information frame being a request frame, the second information frame is a response frame; and sub-channels on which the first network device sends the request frame are partially the same as sub-channels on which the second network device returns the response frame.

In an embodiment, in response to the first network device sending a unicast-type request frame to the second network device, the first network device sends the unicast-type request frame on sub-channels overlapping sub-channels including a primary channel corresponding to the second network device.

In an embodiment, the first information frame includes working channel information of the primary channel corresponding to the first network device.

In an embodiment, in response to the first network device sending a third information frame to a terminal device or a third network device on the first channel, sending the first information frame to the second network device on the first channel includes switching, by the first network device, from the first channel to the second channel and sending the first information frame to the second network device on the second channel.

In an embodiment, the communication apparatus applied to the first network device also includes a configuration module configured to configure a random backoff window on the second channel and contend for channel resources.

In an embodiment, the first network device contends for channel resources on both a primary channel corresponding to the first network device and a primary channel corresponding to the second network device.

In an embodiment, the first network device switches from the first channel to the second channel, and the first network device and the second network device perform information frame exchange for at least two times.

In an embodiment, sending the first information frame to the second network device on the first channel includes on a primary channel of a second neighboring network device corresponding to the second network device, sending, through a first neighboring network device corresponding to the first network device, the first information frame to the second neighboring network device corresponding to the second network device, where the first information frame carries configuration information of the first network device.

In an embodiment, receiving the second information frame returned by the second network device on the second channel includes receiving the second information frame returned through the second neighboring network device corresponding to the second network device, where the second information frame carries configuration information of the second network device.

In an embodiment, a carrier field of the configuration information of the first network device and a carrier field of the configuration information of the second network device each include at least one of the following: an ML field, an RNR field, an NR field, or an MBSSID field.

The communication apparatus of this embodiment is configured to implement the communication method applied to the first network device according to the embodiment shown in FIG. 7 and has similar implementation principles and technical effects. The details are not repeated here.

In an embodiment, FIG. 12 is a block diagram of a communication apparatus according to embodiments of the present application. This embodiment is applied to a second network device. As shown in FIG. 12, the communication apparatus of this embodiment includes a receiving module 410 and a returning module 420.

The receiving module 410 is configured to receive a first information frame sent by a first network device on a first channel.

The returning module 420 is configured to return a second information frame to the first network device on a second channel.

In an embodiment, the first information frame includes at least one of the following types: a multicast-type non-request frame, a unicast-type non-request frame, a unicast-type request frame, or a multicast-type request frame.

In an embodiment, the first information frame and the second information frame each include at least one of the following: a beacon frame, a probe request frame, a probe response frame, a multi-link probe request frame, a multi-link probe response frame, an association request frame, a reassociation request frame, an association response frame, a reassociation response frame, an authentication frame, or an action frame.

In an embodiment, the first channel includes a working channel corresponding to the first network device, and the receiving module 410 is configured to receive the first information frame sent by the first network device on all sub-channels of the working channel corresponding to the first network device. The sub-channels of the working channel corresponding to the first network device include a primary channel corresponding to the first network device.

In an embodiment, the first network device does not send the first information frame on sub-channels whose current channel state is an occupied state.

In an embodiment, in response to the current channel state of the primary channel corresponding to the first network device being an occupied state, configuring random backoff windows for sub-channels, other than the primary channel, of the working channel corresponding to the first network device is delayed until the current channel state of the primary channel corresponding to the first network device becomes an idle state.

In an embodiment, in response to the current channel state of the primary channel corresponding to the second network device being an occupied state, configuring random backoff windows for sub-channels, other than the primary channel, of the working channel corresponding to the first network device is delayed until the current channel state of the primary channel corresponding to the second network device becomes an idle state.

In an embodiment, in response to the first information frame being a request frame, the second information frame is a response frame; and sub-channels on which the first network device sends the request frame are partially the same as sub-channels on which the second network device returns the response frame.

In an embodiment, in response to the first network device sending a unicast-type request frame to the second network device, the first network device sends the unicast-type request frame on sub-channels overlapping sub-channels including a primary channel corresponding to the second network device.

In an embodiment, the first information frame includes working channel information of the primary channel corresponding to the first network device.

In an embodiment, in response to the first network device sending a third information frame to a terminal device or a third network device on the first channel, receiving the first information frame sent by the first network device on the first channel includes switching, by the first network device, from the first channel to the second channel and receiving, on the second channel, the first information frame sent by the first network device.

In an embodiment, the first network device contends for channel resources on both a primary channel corresponding to the first network device and a primary channel corresponding to the second network device.

In an embodiment, the first network device switches from the first channel to the second channel, and the first network device and the second network device perform information frame exchange for at least two times.

In an embodiment, the receiving module 410 is configured to, on a primary channel of a second neighboring network device corresponding to the second network device, receive, through the second neighboring network device corresponding to the second network device, the first information frame sent through a first neighboring network device corresponding to the first network device, where the first information frame carries configuration information of the first network device.

In an embodiment, returning the second information frame to the first network device on the second channel includes returning, through the second neighboring network device corresponding to the second network device, the second information frame to the first network device, where the second information frame carries configuration information of the second network device.

In an embodiment, a carrier field of the configuration information of the first network device and a carrier field of the configuration information of the second network device each include at least one of the following: an ML field, an RNR field, an NR field, or an MBSSID field.

The communication apparatus of this embodiment is configured to implement the communication method applied to the second network device according to the embodiment shown in FIG. 8 and has similar implementation principles and technical effects. The details are not repeated here.

In an embodiment, FIG. 13 is a diagram illustrating the structure of a communication device according to embodiments of the present application. As shown in FIG. 13, the device of the present application includes a processor 510, a memory 520, and a communication module 530. One or more processors 510 may be provided in the device. FIG. 13 shows one processor 510 as an example. One or more memories 520 may be provided in the device. FIG. 13 shows one memory 520 as an example. The processor 510, the memory 520, and the communication module 530 of the device may be connected by a bus or otherwise. FIG. 13 uses connection by a bus as an example. In this embodiment, the device may be a first network device or a second network device.

As a computer-readable storage medium, the memory 520 may be configured to store software programs, computer-executable programs, and modules, such as program instructions/modules (for example, the sending module 310 and the receiving module 320 of the communication apparatus) corresponding to the device of any embodiment of the present application. The memory 520 may include a program storage region and a data storage region. The program storage region may store an operating system and an application program required by at least one function. The data storage region may store data created according to the use of the device. In addition, the memory 520 may include a high-speed random-access memory and may also include a nonvolatile memory such as at least one disk memory, a flash memory, or another nonvolatile solid-state memory. In some examples, the memory 520 may be remote from the processor 510 and connectable to the device via a network. Examples of the network include, but are not limited to, the Internet, an intranet, a local area network, a mobile communication network, and a combination thereof.

In the case where the communication device is the first network device, the device may be configured to perform the communication method applied to the first network device according to any aforementioned embodiment and has corresponding functions and effects.

In the case where the communication device is a second network device, the device may be configured to perform the communication method applied to the second network device according to any aforementioned embodiment and has corresponding functions and effects.

Embodiments of the present application also provide a storage medium including computer-executable instructions. The computer-executable instructions are configured to, when executed by a computer processor, cause the computer processor to perform a communication method applied to a first communication network. The communication method includes sending a first information frame to a second network device on a first channel; and receiving a second information frame returned by the second network device on a second channel.

Embodiments of the present application also provide a storage medium including computer-executable instructions. The computer-executable instructions are configured to, when executed by a computer processor, cause the computer processor to perform a communication method applied to a second communication network. The communication method includes receiving a first information frame sent by a first network device on a first channel; and returning a second information frame to the first network device on a second channel.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding describes optional embodiments of the present application that are not intended to limit the present application. For those skilled in the art, the present application may have various modifications and variations. Any modifications, equivalent substitutions, and improvements made within the spirit and principle of the present application are within the scope of the present application.

## Claims

1. A communication method, applied to a first network device, comprising:
sending a first information frame to a second network device on a first channel; and
receiving a second information frame returned by the second network device on a second channel.

2. The communication method of claim 1, wherein the first information frame comprises at least one of the following types: a multicast-type non-request frame, a unicast-type non-request frame, a unicast-type request frame, or a multicast-type request frame.

3. The communication method of claim 1, wherein the first information frame and the second information frame each comprise at least one of the following: a beacon frame, a probe request frame, a probe response frame, a multi-link probe request frame, a multi-link probe response frame, an association request frame, a reassociation request frame, an association response frame, a reassociation response frame, an authentication frame, or an action frame.

4. The communication method of claim 1, wherein the first channel comprises a working channel corresponding to the first network device, and sending the first information frame to the second network device on the first channel comprises:
sending the first information frame to the second network device on all sub-channels of the working channel corresponding to the first network device, wherein the sub-channels of the working channel corresponding to the first network device comprise a primary channel corresponding to the first network device.

5. The communication method of claim 4, further comprising:
configuring a same random backoff window on all the sub-channels of the working channel corresponding to the first network device and contending for channel resources;
wherein sending the first information frame to the second network device on the first channel comprises:
sending the first information frame to the second network device on all sub-channels on which channel resources are successfully contended for.

6. The communication method of claim 4, wherein the first network device does not send the first information frame on sub-channels whose current channel state is an occupied state.

7. The communication method of claim 4, wherein in response to a current channel state of the primary channel corresponding to the first network device being an occupied state, configuring random backoff windows for sub-channels, other than the primary channel, of the working channel corresponding to the first network device is delayed until the current channel state of the primary channel corresponding to the first network device becomes an idle state.

8. The communication method of claim 4, wherein in response to a current channel state of a primary channel corresponding to the second network device being an occupied state, configuring random backoff windows for sub-channels, other than the primary channel, of the working channel corresponding to the first network device is delayed until the current channel state of the primary channel corresponding to the second network device becomes an idle state.

9. The communication method of claim 4, wherein in response to the first information frame being a request frame, the second information frame is a response frame, and sub-channels on which the first network device sends the request frame are partially the same as sub-channels on which the second network device returns the response frame.

10. The communication method of claim 4, wherein in response to the first network device sending a unicast-type request frame to the second network device, the first network device sends the unicast-type request frame on sub-channels overlapping sub-channels comprising a primary channel corresponding to the second network device.

11. The communication method of claim 4, wherein the first information frame comprises working channel information of the primary channel corresponding to the first network device.

12. The communication method of claim 1, wherein in response to the first network device sending a third information frame to a terminal device or a third network device on the first channel, sending the first information frame to the second network device on the first channel comprises:
switching from the first channel to the second channel and sending the first information frame to the second network device on the second channel.

13. The communication method of claim 12, further comprising:
configuring a random backoff window on the second channel and contending for channel resources.

14. The communication method of claim 12, wherein the first network device contends for channel resources on both a primary channel corresponding to the first network device and a primary channel corresponding to the second network device.

15. The communication method of claim 12, wherein the first network device switches from the first channel to the second channel, and the first network device and the second network device perform information frame exchange for at least two times.

16. The communication method of any one of claims 1 to 15, wherein sending the first information frame to the second network device on the first channel comprises:
on a primary channel of a second neighboring network device corresponding to the second network device, sending, through a first neighboring network device corresponding to the first network device, the first information frame to the second neighboring network device corresponding to the second network device, and
wherein the first information frame carries configuration information of the first network device.

17. The communication method of claim 16, wherein receiving the second information frame returned by the second network device on the second channel comprises:
receiving the second information frame returned through the second neighboring network device corresponding to the second network device, and
wherein the second information frame carries configuration information of the second network device.

18. The communication method of claim 17, wherein a carrier field of the configuration information of the first network device and a carrier field of the configuration information of the second network device each comprise at least one of the following: a multi-link, ML, field, reduced neighbor report, RNR, field, a neighbor report, NR, field, or a multiple basic service set identifier, MBSSID, field.

19. A communication method, applied to a second network device, comprising:
receiving a first information frame sent by a first network device on a first channel; and
returning a second information frame to the first network device on a second channel.

20. A communication device, comprising a memory and at least one processor, wherein
the memory is configured to store at least one program; and
when executed by the at least one processor, the at least one program causes the least one processor to perform the communication method of any one of claims 1 to 18 or the communication method of claim 19.

21. A storage medium storing a computer program which, when executed by a processor, causes the processor to perform the communication method of any one of claims 1 to 18 or the communication method of claim 19.
